# EUROPEAN PATENT SPECIFICATION

(11) **EP 0 918 800 B1**
(45) Date of publication and mention of the grant of the patent: **02.01.2002**
(21) Application number: 97942300.1
(22) Date of filing: 30.09.1997
(51) Int. Cl.: C08B 37/18

(54) **FRUCTAN DERIVATIVES**
FRUKTANDERIVATE
DERIVES DU FRUCTOSANE

(30) Priority: 30.09.1996 NL 1004153
(43) Date of publication of application: 02.06.1999
(73) Proprietor: Coöperatie Cosun U.A., 4700 BH Roosendaal (NL)
(72) Inventor: KUZEE, Hendrika, Cornelia, NL-4388 BK Oost-Souburg (NL); BOLKENBAAS, Mariette, Ellen, Boukje, NL-4307 AA Oosterland (NL); JONKER, Ronald, NL-2554 BP Den Haag (NL)
(74) Representative: de Bruijn, Leendert C.
(86) International application number: NL9700543
(87) International publication number: WO9814482

(56) References cited:
- EP-A- 0 556 688
- WO-A-96/34017
- M.E. CARR: "Preparation of cartionic starch containing quaternary ammonium substituents by reactive twin-screw extrusion processing" JOURNAL OF APPLIED POLYMER SCIENCE, vol. 54, 1994, USA, pages 1855-1861, XP000512037

## Description

The invention relates to novel fructan derivatives, in particular to novel cationic derivatives of inulin.

Cationic polysaccharides have interesting properties which, for example, render the polysaccharides suitable as additives in papermaking. Cationic polysaccharides of this type contain side chains containing an amino group or a quaternary ammonium group bonded to oxygen. The preparation and use of cationic starch have been described, for example by M.E. Carr and M.O. Bagby (*Starch/Stärke* **33** (1981) 310-312) and in US Patent 4,088,600. The degrees of substitution (DS: average number of cationic groups per anhydroglucose unit) of starch arc generally low (less than 0.06).

McAfee et al. (*J. Nucl. Med.* **27** (1986) 513-520) have described the preparation of DTPA conjugates (DTPA = diethylenetriaminepentaacetic acid) of inulin as complexing agents for metals (In¹¹¹) for medical diagnosis; the conjugates were prepared via aminoethylinulin which, despite the use of more than 5 equivalents of bromoethylammonium bromide in DMSO (dimethyl sulphoxidc) with sodium methoxide, had a DS of only 0.095.

There is a need for cationic polysaccharides which have improved characteristics compared with cationic starch, cellulose and guaran, such as an increased loading with cationic groups.

It has now been found that cationic derivatives can be prepared from fructans, including inulin, which derivatives have better solubility, a higher degree of substitution, lower viscosity and/or better biodegradability than the known cationic polysaccharides.

The derivatives according to the invention are defined by the main claim. More detailed preferences are given in the dependent claims. The derivatives preferably have a degree of substitution (that is to say a cationic group content per monosaccharide unit) (DS) of 0.1 - 2.5, in particular of 0.3 - 2.0.

In this context cationic compounds arc understood to be nitrogen compounds which are intrinsically cationic (quaternary ammonium compounds) or which arc cationic only in an acid medium (primary, secondary or tertiary amine compounds). The neutral amines corresponding to the ammonium compounds therefore always fall under the same concept.

In this context fructans are understood to be all oligosaccharides and polysaccharides which have a multiplicity of anhydrofructose units. The fructans can have a polydisperse chain length distribution and can be straight-chain or branched. The fructans comprise both products obtained directly from a vegetable or other source and products in which the average chain length has been modified (increased or reduced) by fractionation, enzymatic synthesis or hydrolysis. The fructans have an average chain length (= degree of polymerisation, DP) of at least 2 up to about 1,000, in particular from 3 up to about 60. For some uses, the preferred average chain length is at least 8, in particular at least 15 or even at least 25 monosaccharide units. The preferred average chain length for other uses is from 3 to 15 monosaccharide units. Preferably, the fructan contains predominantly β-2,1 bonds, as in inulin. Inulin can be obtained from, for example, chicory, dahlias and Jerusalem artichokes.

Fractionation of fructans such as inulin can be achieved by, for example, low-temperature crystallisation (see WO 96/01849), separation by column chromatography (see WO 94/12541), membrane filtration (see EP-A-440074 and EP-A-627490) or selective precipitation with an alcohol. Other fructans, such as long-chain fructans which, for example, are obtained on crystallisation, fructans from which monosaccharides and disaccharides have been removed and fructans in which the chain length has been lengthened enzymatically, can also be converted to cationic derivatives. Prior hydrolysis to obtain shorter fructans can be carried out, for example enzymatically (endoinulinase), chemically (water plus acid) or by heterogenous catalysis (acid ion exchange resin). Alternatively or additionally, crosslinked fructans can be used for producing cationic derivatives.

Reduced fructans can also be used. Reduced fructans are fructans in which reducing terminal groups (usually fructose groups) have been reduced, for example using sodium borohydride or using hydrogen in the presence of a transition metal catalyst.

Furthermore, hydroxyalkylated, carboxymethylated and oxidised fructans can also serve as the basis for cationic derivatives. Hydroxyalkylated and carboxymethylated fructans can be obtained by reaction of the fructan with, respectively, ethylene oxide or another alkylene oxide (see EP-A-638589) and chloroacetic acid, preferably in an aqueous medium with a base. Oxidised fructans are fructans which have been converted by treatment with, for example, hypochlorite or periodate and/or chlorite into derivatives which contain carboxyl and/or aldehyde groups. The introduction of cationic groups into fructan derivatives containing carboxyl groups leads to amphoteric compounds which have interesting properties. A modified inulin which is particularly suitable for conversion to a cationic derivative is a reduced dialdchyde-inulin. When dialdehyde-inulin is reduced, for example with hydrogen in the presence of a transition metal or with sodium borohydride, a polyol (poly-α-hydroxymethyl-α-[2-hydroxy-1-(hydroxymethyl)-ethoxy]ethylene oxide) is produced which contains a large number of primary hydroxyl groups. These polyols can be converted to cationic derivatives. Alternatively, dialdehyde-inulin can be reductively aminated (in one step or two steps) using conventional reducing agents to produce the polyol indicated above wherein one or more hydroxymethyl groups are replaced by (substituted) aminomethyl groups, which may subsequently be quaternised. Amines to be used in the reductive amination include ammonia and primary C₁-C₆ alkylamines and alkylenediamines.

Examples of straight-chain or branched C₂-C₆ alkylene groups which arc optionally preceded by a carbonyl group or optionally interrupted by one or two oxygen atoms or optionally alkylated and/or protonated imino groups and which are optionally substituted by one or two hydroxyl groups or amine groups or a carboxyl or carbamoyl group are ethylene, 1,2-propylene, 1,3-propylene, 2-hydroxy-1,3-propylene, tetramethylene, hexamethylene, 2,2-dimethyl-1,3-propylene, 2-butenylene, 2-butynylene, 2,4-hexadienylene, cyclohexylene, N-methyliminodiethylene, diiminotriethylene, oxydiethylene, oxydipropylene, ethyleneiminocarbonylmethylene, carbonylethylene and carboxyethylene. Derivatives containing a 3-aminopropyl group or a 3-carboxymethylaminopropyl group also form part of the invention but the compounds have been described in International Patent Application PCT/NL96/00187, which was not published previously. Thus where this prior application constitutes a prior right, the proviso to claim 1 applies that if A represents a 1,3-propylene group, R¹ represents a group other than hydrogen and carboxymethyl. Similarly, where PCT/NL97/00409 constitutes a prior right, the proviso applies to claim 1 that if A represents an iminoethylene group bonded to a ring-opened residue of an anhydrofructose unit, at least one of R¹, R² and R³ represents a group other than hydrogen and carboxymethyl.

The invention also relates to a process of preparing the above-mentioned cationic derivatives. The reaction can be carried out in various ways known per se. Derivatives containing groups of formula -A-N⁺R¹R²R³, where A represents ethylene or 1,2-propylene, can, for example, be obtained by a reaction of the - optionally modified - fructan with an ethyleneimine (aziridine) substituted in the correct manner on a nitrogen, or 1,2-propyleneimine or aminoethyl halide or 2-aminopropyl halide with a base in an organic solvent or preferably in water. When A represents 2-hydroxy-1,3-propylene, the reaction can be carried out with a glycidylamine or a 3-halo-2-hydroxypropylamine or a corresponding ammonium salt. When A contains a carbamoyl or carboxyl group as a substitucnt, the reaction can be carried out with a 2-dialkylamino-3-halopropionamide or 2-dialkylamino-3-halopropionic acid. When A represents 2-butenylene an unsubstituted or substituted 4-chloro-2-butenylamine can be used. Other suitable reagents are 2-chloropropyldimethylamine, N-(2-chloroethyl)-morpholine, 3-bromopropyl-trimethylammonium bromide, chloroethyldiethylamine, 4-chloro-1-methyl-piperidine, and the like.

Derivatives in which A represents an alkylene group interrupted by oxygen atoms or imine groups can be obtained analogously, for example using a reagent of the formula X-CH₂-CH₂-[Y-CH₂-CH₂]ₙ-N⁺R¹R²R³ (X=Cl, Br and the like, Y = O, NH, NCH₃, n = 1 or 2). Where Y = O and n = 1, the derivatives can also be obtained by reaction of the fructan with an alkylene oxide to give a hydroxyalkylfructan with a high degree of substitution, followed by reaction with a β-haloamine of the formula X-CH₂-CH₂-N⁺R¹R²R³. Derivatives in which A has the formula -C(=NR⁴)-NR¹R² (iminocarbamoyl) can be obtained by reaction of the fructan with cyanamide or an N-substituted cyanamide. One of the nitrogen atoms in the iminocarbamoyl group can have been protonated or have been quaternised, for example with methyl.

Derivatives of the above-mentioned formulae in which R³ represents -A-Fruc are cross-linked derivatives which can be obtained by reaction of the fructan with an amine containing two or three coupling functional groups, such as N,N-bis- or N,N,N-tris-(2-chloroethyl)amine, N,N-bis- or N,N,N-tris-(3-chloro-2-hydroxypropyl)amine and N,N'-bis(2-chloroethyl)piperazine. Any 2-chloroethyl or 3-chloro-2-hydroxypropyl groups remaining after the coupling reaction can simply be hydrolysed to 2-hydroxyethyl or 2,3-dihydroxypropyl groups, respectively.

A review of synthesis methods for cationic derivatives of starch is given in Chapter 8, "Preparation of Cationic Starches" by D.B. Solarek in "Modified Starches, Properties and Uses", Ed. O.B. Wurzburg, CRC Press, **1986**, pp. 114-121, which methods are generally usable for the preparation of the derivatives in question.

In general it is preferred to carry out the preparation of the fructan derivatives according to the invention in an aqueous medium, if appropriate in the presence of a base. Depending on the desired degree of substitution it is possible to use, in this reaction, for example 0.1 - 10 equivalents, in particular 0.2 - 5 equivalents, of the amine reagent concerned, which equivalents are based on the number of monosaccharide units (anhydrofructose units) in the fructan. The reaction can be carried out at room temperature, but preferably at an elevated temperature of 30 - 150 °C. The reaction times are usually between a few minutes and a few hours, depending on the temperature. After the reaction has gone to completion, the reaction mixture is neutralised and, partly depending on the intended use, worked up. If the derivative has to be free from salts and residual reagent or hydrolysis products thereof (such as hydroxyalkylamines) for the intended use, known purification techniques can be used, such as electrodialysis, nanofiltration and precipitation with an alcohol, such as ethanol.

A particularly advantageous process for preparing the present derivatives involves a reaction carried out under conditions of elevated temperature, intensive kneading and a small amount of solvent, such as those which prevail in an extrusion reactor. An example of such conditions for the preparation of starch derivatives is described by Meuser et al., *Starch/Stärke* **42** (1990), 330-360. Preparation of cationic starch derivatives by extrusion processing has also been described by M.E. Carr, *J. Appl. Pol. Sc.* **54** (1994) 1855-1861. For the preparation of the derivatives in question it is possible, with this method, for example to meter the fructan into the extruder in solid form and, in addition, to meter the base (sodium hydroxide solution) and amine reagent (for example 3-chloro-2-hydroxypropyl-trimethylammonium chloride) into the extruder in the form of a concentrated solution. With this procedure the solids content is preferably greater than 25 % and in particular greater than 50 % up to close to 100 %. The temperature can, for example, be chosen between 60 and 150 °C. Under these conditions a significant shortening of the reaction time is obtained and, furthermore, high efficiency is achieved.

If desired, the cationic derivatives can then be further modified. As already stated, the neutral amines can be converted to the acid addition salts, such as hydrochlorides, hydrobromides, sulphates, phosphates, acetates and the like. Derivatives containing a primary, secondary or tertiary amine group can be converted to further N-alkylated and optionally quaternary derivatives using conventional alkylating agents such as dimethyl sulphate, ethyl bromide, chlorocthanol, allyl chloride, benzyl chloride, and the like.

Other modifications of the derivatives according to the invention are also possible, such as oxidation with, for example, hypochlorite, periodic acid or hydrogen peroxide, carboxyl groups being formed. The derivatives can also be carboxymethylated with, for example, chloroacetic acid or sulphoalkylated with, for example, propylene sulphone. Such modifications are preferably carried out in such a way that the degree of substitution by the groups introduced in this way, such as carboxyl groups, is lower than the degree of substitution by amine or ammonium groups.

The cationic derivatives according to the invention can be used for diverse purposes. Cationic fructan derivatives with a high degree of substitution can be used as disinfectants. The cationic derivatives can also be used as cosmetic ingredients, for example in hair conditioners and moulding gels. They neutralise the excess negative charge on the hair lamellae and have a moisturising ability. Due to the low molecular weight, penetration into the hair is possible, which results in a prolonged moisturising effect. No foam reduction is observed when cationic inulin is used in combination with surfactants (shampoo).

Furthermore, the derivatives are outstandingly suitable as additives in papermaking. In this context they can serve, inter alia, as "Anionic trash catchers" (ATC), that is to say agents which catch the harmful elements in papermaking. High levels of organic anionic trash in the pulp will give rise to problems of runnability and/or paper quality. The addition of cationic inulin as ATC will improve the process and will, at the same time, enhance the activity of cationic retention agents such as cationic starch. In this context the cationic fructan derivatives have an advantage over cationic starch because of their low viscosity. The combined use of cationic fructans with flocculants or other cationic polymers or retention agents is also part of the invention.

Another application of the cationic fructan derivatives according to the invention is as shale inhibitors in oil extraction. To this end the derivatives are incorporated in the drilling mud and shield the negative charge in the clay layers over which the drilling mud is fed. For this application the cationic derivative preferably has a high degree of substitution (≥ 1.0). The cationic derivative can optionally be used in combination with a potassium salt.

Other fields of application of the cationic fructan derivatives according to the invention are uses as flocculants and corrosion inhibitors in the treatment of sludge, effluent and process water, as demulsifiers in the metal-processing and petrochemical industries, as textile additives (softeners, anti-shrink agents, agents promoting colour fastness), as adhesives and as an auxiliary for the building, plastics and ceramics industries.

### Example 1

A mixture of 20 g chicory inulin (Frutafit®) with an average DP of 10 (123.5 mmol) plus 3.1 g NaOH (77.2 mmol) at 80 °C is added to 20 ml cold water. After cooling the mixture to 60 °C, 17.8 g of a 65 % solution of 3-chloro-2-hydroxypropyltrimethylammonium chloride (CHPTA) (61.7 mmol) are added in the course of 20 min. After 4 hours at 60 °C the pH is lowered to 6.0 using HCl. The clear solution is cooled to room temperature and 250 ml water are added. The solution is electrodialysed (P1 Aqualyzer from EIVS-Corning, 20 cell pairs, each 69 cm², AFN7/CR2 membrane set, 30 V, 1 % NaCl) for 45 min.

The purified solution of cationic inulin is dried using a Rotavapor (70 °C) and post-dried for 24 hours in an oven at 70 °C. Yield: 26.3 g cationic inulin (96 %) with a nitrogen content of 2.52 % (DS 0.40); the reaction efficiency is 80 %.

### Example 2

A mixture of 600 g chicory inulin (Frutafit® ) fractionated by means of low-temperature crystallisation and having an average DP of 25 (3.70 mmol) and 416 g NaOH (10.41 mol) is added to 600 ml cold water. 2412 g of a 65 % solution of CHPTA (8.33 mol) are added at 60 °C in the course of 45 min. After reaction for 24 hours at 60 °C the pH is brought to 7.0 using HCl. The clear solution is cooled, 6 1 water are added and the resulting solution is electrodialysed for 24 hours using the equipment specified in Example 1. The purified cationic inulin is dried (Rotavapor 70 °C).
Yield: 1385 g cationic inulin (95 %) having a nitrogen content of 5.44 % (DS 1.53); the reaction efficiency is 68 %. The product is light brown in colour.

### Example 3

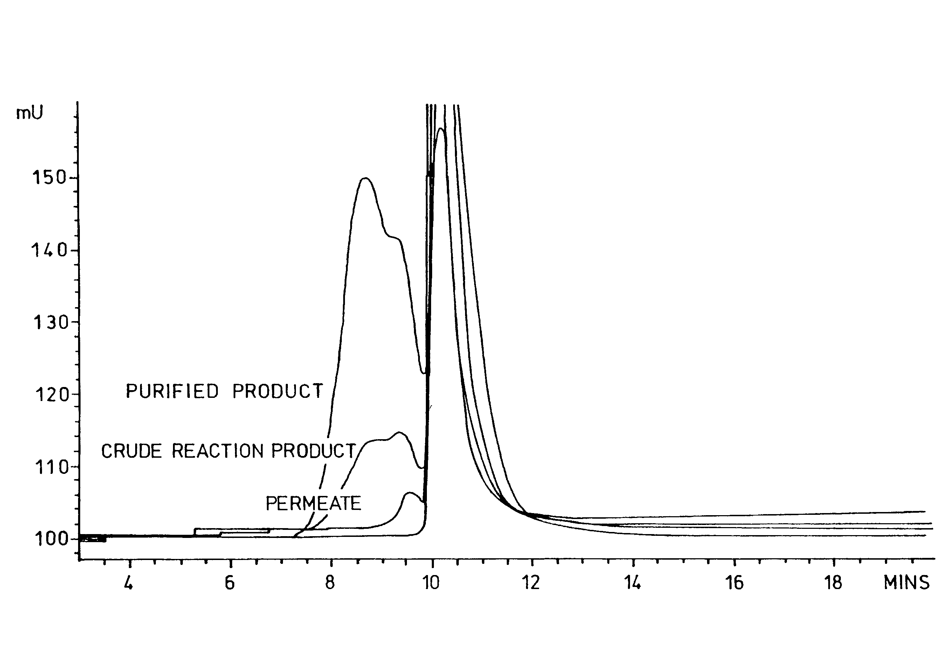

A mixture of 400 g chicory inulin (Frutafit®) reduced with sodium borohydride and having an average DP of 10 (2.47 mol) plus 61.7 g NaOH (1.54 mol) is added to 400 ml cold water. 357.3 g of a 65 % solution of CHPTA (1.23 mol) is then added at 60 °C. After reaction for 24 hours at 45°C the pH is brought to 7.0 using HCl. The clear solution is cooled, 2.5 l water are added and the resulting solution is subjected to nanofiltration for 24 hours (Amafilter model PSS 2TZ laboratory nanofiltration unit; 90 mm flat membrane, 44 cm², polyamide ATF 50 from Membracon Filtration, pressure 325 bar, pump speed 300 l/hour). The solution purified in this way is dried.
Yield: 509.6 g colourless cationic inulin (93 %) having a nitrogen content of 2.57 % (DS 0.39). Compared with the crude reaction product obtained before nanofiltration, the average molecular weight is found to have been increased as a result of the removal of low-molecular derivatives. This is shown in the appended figure whcih illustrates the molecular weight distribution of crude reaction solution, product and permeate of cationic inulin DS 0.39 using a Polysep P2000 column and 0.15 M NaCl as an eluant.

### Example 4

### Conditioning shampoo with cationic inulin

A mild shampoo formulation was prepared using the ingredients shown in the table below.

| Ingredient | INCI Nomenclature | % (w/w) |
|---|---|---|
| Demineralized water | Demineralised water | 53.30 |
| Lexaine C | Cocamidopropyl Betainc | 8.00 |
| Loramide LM | Lauramide DEA | 1.20 |
| Standapol ES-2 | Sodium Laureth Sulfate | 32.00 |
| Miranol C2M SF | Disodium Cocamphodipropionate | 2.50 |
| Cationic Inulin Example 2 | | 2.00 |
| Germall 115 | Diazolidinyl Urea | 0.25 |
| Fragrance | Fragrance | 0.25 |
| Citric Acid | Citric Acid | QS |
| Sodium Chloride | Sodium Chloride | 0.50 |

The surfactants were added to the water with slow sweep agitation. The cationic inulin was added and mixed well. The pH was adjusted to 6.5 using citric acid and sodium chloride was added to adjust the viscosity. After mixing well, fragrance and preservative were added.

### Example 5

### Production of cationic inulin by extrusion

A twin screw extruder (Clextral BC-45) having a length of 1 m and consisting of 4 segments of 25 cm was used. The segments were equipped with a heating mantle having a capacity from inlet to outlet of 5, 7, 5 and 7 kWh, respectively. Inulin (Frutafit® ) was introduced at a dosing rate of 125 g/min (0.772 mol/min), sodium hydroxide (50% solution) was added at a rate of 67.9 g/min (0.849 mol/min) and CHPTA (65% solution) was introduced at 223.4 g/min (0.772 mol/min). The outlet temperature was 75°C and the rotation speed of the extruder was 100 rpm. The residence time in the extruder was about 1.5 minute. The brownish extrusion product was only very slightly viscous and had a DS of 0.64. The reaction efficiency was therefore 64%. The CHPTA conversion was 88%.

### Example 6

### Cationic carboxymethylated inulin

Cationic inulin as produced in example 1 (20 g, 89.8 mmol) was mixed was 3.1 g sodium monochloroacetate (26.6 mmol) and 1.17 g NaOH (29.3 mmol). This mixture was added to 20 ml water of 40°C. After 2 h of reaction at 80°C, the pH was lowered to 7.0 using HCI. The clear dark brown solution was cooled, desalted and purified by means of electrodialysis (P1, Aqualyzer from EIVS-Corning, 20 cell pairs, each 69 cm², AMC/CSV membrane set, 30V, 1% NaCl) for 60 minutes.

The purified amphoteric product was dried using a rotavapor (70°C) and postdried in a vacuum oven at 70°C. The dried product has a cationic DS of 0.40 and a carboxymethyl DS of 0.19.

### Example 7

### Cationic product derived from dialdehyde inulin

A mixture of 100 g dialdehyde inulin (obtained by NaBH₄ reduction of inulin) having an average DP of 25, and 75.6 g NaOH were added to 150 ml of cold water. After cooling the solution to 60°C, 529 g of a 65% solution of CHPTA was added over 30 minutes. After 3 h reaction at 65°C, 250 ml of water was added and the pH was lowered to 6.0 using HCI. The end product was a clear brownish solution having a very low viscosity. The solution was desalted and purified by electrodialysis. Yield: 279 g cationic inulin having a nitrogen content of 5.95% (DS = 1.94). The reaction efficiency was 65%.

### Example 8

### Preparation of amino derivatives of reduced dialdehyde-inulin

3.6, 6.0 and 12 g (60; 100; 200 mmol) diaminoethane respectively are added to 16.0 g (100 mmol) dialdehyde-inulin (degree of oxidation 30, 50 and 100 % dissolved in 146 ml demineralised water, after which the reaction mixtures are stirred for 16 hours at room temperature. The imines formed are then reduced with, respectively, 3.8, 6.3 and 12.6 g (60; 100; 200 mmol) sodium cyanoborohydride. After stirring for another 16 hours at room temperature, the mixture is acidified (2N HCl) and the pH adjusted to 7-8 and the mixture is then evaporated. Quaternisation is carried out by treatment of the residue with an excess of methyl iodide, and residual methyl iodide is then removed in vacuo.

### Example 9

### Cationic inulin as anionic trash catcher

To a 60 g/l Cassé suspension of PM7 (Paper Machine 7) Lanaken was added a 40% solution of Anionic Trash Catcher consisting of:
(a) 2-hydroxy-3-trimethylammoniopropyl inulin having a DS of 1.15 and an average chain length of 30; or
(b) 2-hydroxy-3-trimethylammoniopropyl inulin having a DS of 1.25 and an average chain length of 10;
in an amount corresponding to 0.4% (v/w) or 0.8% (v/w). After a contact time of 10 minutes, the suspension was filtered. The pH, turbidity, COD, conductivity and cationic demand of the filtrate was determined using Current Detection equipment from Mutec.

The results are summarised in the table below.

| | pH | conductivity µS/cm | COD mg O₂/l | turbidity NTU | cat. demand µeq/l |
|---|---|---|---|---|---|
| untreated Cassé | 6.9 | 1265 | 1300 | 3310 | 610 |
| Cassé + 0.4% (a) | 7.1 | 1630 | 1390 | 654 | 357 |
| Cassé + 0.8% (a) | 7.0 | 1670 | 1335 | 215 | 210 |
| Cassé + 0.4% (b) | 7.0 | 1695 | 1390 | 960 | 265 |
| Cassé + 0.8% (b) | 7.1 | 1760 | 1365 | 273 | 250 |

## Claims

1. Fructan derivative, **characterised in that** it contains, per monosaccharide unit, on average at least 0.1 cationic group of the formula:
-A-N⁺R¹R²R³ or -C(=NR⁴)-NR¹R²
in which formula:
A represents a straight-chain or branched C₂-C₆ alkylene group which is optionally preceded by a carbonyl group or optionally interrupted by one or two oxygen atoms or imino or alkylimino groups and optionally substituted by one or two hydroxyl groups or amine groups or a carboxyl or carbamoyl group;
or A represents the residue of a monosaccharide unit;
R¹ and R² each represent hydrogen, methyl, carboxymethyl, phosphonomethyl, ethyl, hydroxyethyl, propyl, isopropyl, allyl, hydroxypropyl or dihydroxylpropyl or, together with the nitrogen atom, form a pyrrolidino, piperidino, piperazino, N'-alkylpiperazino, N'-(hydroxyalkyl)piperazino, N'-(aminoalkyl)piperazino, morpholino or hexamethyleneamino group;
R³ represents hydrogen, C₁-C₁₈ alkyl, C₃-C₁₈ alkenyl, alkynyl or cycloalkyl, C₄-C₁₈ cycloalkyl-alkyl or C₇-C₁₈ aralkyl or a group of the formula -A-Fruc, where A has the above-mentioned meaning and Fruc represents a fructan residue bonded via oxygen; and
R⁴ represents hydrogen, methyl, ethyl, hydroxyethyl, hydroxypropyl or dihydroxypropyl; where the amine nitrogen atoms can be uncharged or protonated or quaternised with methyl, ethyl, hydroxyethyl, hydroxypropyl or dihydroxypropyl;
with the proviso that if A represents a 1,3-propylene group bound to an oxygen atom of an undisrupted monosaccharide unit of the fructan, R³ represents a group other than hydrogen, alkyl or alkenyl, or at least two of R¹, R² and R³ represent a group other than hydrogen.

2. Fructan derivative according to claim 1, **characterised in that** it contains, per monosaccharide unit, on average 0.3 - 2.0 cationic group.

3. Fructan derivative according to claim 1 or 2, **characterised in that** A is bonded to an oxygen atom of the monosaccharide unit.

4. Fructan derivative according to one of claims 1-3, wherein R¹ and R² each represent methyl or ethyl.

5. Fructan derivative according to one of claims 1-4, wherein A represents ethylene or 2-hydroxypropylene.

6. Fructan derivative according to one of claims 1-5, wherein R¹, R² and R³ each represent methyl or ethyl and A represents a 2-hydroxy-1,3-propylene group.

7. Fructan derivative according to one of claims 1-6, wherein the fructan is inulin.

8. Process for preparing a fructan derivative containing, per monosaccharide unit, on average at least 0.1 cationic group of the formula:
-A-N⁺R¹R²R³ or -C(=NR⁴)-NR¹R²
in which formula:
A represents a straight-chain or branched C₂-C₆ alkylene group which is optionally preceded by a carbonyl group or optionally interrupted by one or two oxygen atoms or imino or alkylimino groups and optionally substituted by one or two hydroxyl groups or amine groups or a carboxyl or carbamoyl group;
or A represents the residue of a monosaccharide unit;
R¹ and R² each represent hydrogen, methyl, carboxymethyl, phosphonomethyl, ethyl, hydroxyethyl, propyl, isopropyl, allyl, hydroxypropyl or dihydroxylpropyl or, together with the nitrogen atom, form a pyrrolidino, piperidino, piperazino, N'-alkylpiperazino, N'-(hydroxyalkyl)piperazino, N'-(aminoalkyl)piperazino, morpholino or hexamethyleneamino group;
R³ represents hydrogen, C₁-C₁₈ alkyl, C₃-C₁₈ alkenyl, alkynyl or cycloalkyl, C₄-C₁₈ cycloalkyl-alkyl or C₇-C₁₈ aralkyl or a group of the formula -A-Fruc, where A has the above-mentioned meaning and Fruc represents a fructan residue bonded via oxygen; and
R⁴ represents hydrogen, methyl, ethyl, hydroxyethyl, hydroxypropyl or dihydroxypropyl; where the amine nitrogen atoms can be uncharged or protonated or quaternised with methyl, ethyl, hydroxyethyl, hydroxypropyl or dihydroxypropyl;
by reacting the fructan or a derivative thereof with a compound of the formula -X-A-N⁺R¹R²R³ (X = chlorine or bromine) or X-A-NR²R³ or an epoxide corresponding thereto after removal of HX, or with NC-NR¹R²R³.

9. Process according to claim 8, wherein the reaction is carried out at a temperature of 30 - 150 °C in an aqueous alkaline solution.

10. Process according to claim 9, wherein the reaction is carried out in extrusion equipment.

11. Process according to one of claims 8-10, wherein the fructan is reacted with 3-chloro-2-hydroxypropyltrimethylammonium chloride or the epoxide corresponding thereto.

12. Process for preparing a cationic fructan derivative according to claim 1 or 2, wherein a dialdehyde-fructan is reductively aminated and the amination product is optionally quaternised.

13. Use of a cationic fructan derivative according to any one of claims 1-7 or prepared by the process according to any one of claims 8-12, as an auxiliary in papermaking, water treatment, sludge treatment, or in cosmetics, or as a disinfectant, hair conditioner, flocculant, shale inhibitor, corrosion inhibitor, demulsifier, adhesive or textile auxiliary, or as an additive in building, ceramics or plastics.

## Patentansprüche

1. Fructanderivat, **dadurch gekennzeichnet, daß** das Derivat pro Monosaccharid-Einheit im Durchschnitt mindestens 0,1 kationische Gruppen der folgenden Formel enthält:
-A-N⁺R¹R²R³ oder -C(=NR⁴)-NR¹R²
wobei:
A eine geradkettige oder verzweigte C₂-C₆-Alkylengruppe repräsentiert, der wahlweise eine Carbonylgruppe vorangestellt ist oder die wahlweise durch eine oder zwei Sauerstoffatome oder Imino- oder Alkyliminogruppen unterbrochen ist und wahlweise durch eine oder zwei Hydroxylgruppen oder Amingruppen oder eine Carboxyl- oder Carbamoylgruppe substituiert ist;
oder A den Rest einer Monosaccharid-Einheit repräsentiert;
R¹ und R² jeweils Wasserstoff, Methyl, Carboxymethyl, Phosphonomethyl, Ethyl, Hydroxyethyl, Propyl, Isopropyl, Allyl, Hydroxypropyl oder Dihydroxylpropyl repräsentiert oder gemeinsam mit dem Stickstoffatom eine Pyrrolidino-, Piperidino-, Piperazino-, N'-Alkylpiperazino-, N'-(Hydroxyalkyl)piperazino-, N'-(Aminoalkyl)piperazino-, Morpholino- oder Hexamethylenaminogruppe bildet;
R³ Wasserstoff, C₁-C₁₈-Alkyl, C₃-C₁₈-Alkenyl, Alkinyl oder Cycloalkyl, C₄-C₁₈-Cycloalkyl-Alkyl oder C₇-C₁₈-Aralkyl oder eine Gruppe der Formel -A-Fruc repräsentiert, wobei A die oben bezeichnete Bedeutung hat und Fruc einen über Sauerstoff gebundenen Fructanrest repräsentiert; und
R⁴ Wasserstoff, Methyl, Ethyl, Hydroxyethyl, Hydroxypropyl oder Dihydroxypropyl repräsentiert;
wobei die Aminstickstoffatome ungeladen oder protoniert oder durch Methyl, Ethyl, Hydroxyethyl, Hydroxypropyl oder Dihydroxypropyl quaternisiert sein können;
unter der Voraussetzung, daß, falls A eine 1,3-Propylengruppe, gebunden an ein Sauerstoffatom einer nicht-unterbrochenen Monosaccharid-Einheit des Fructans, repräsentiert, R³ eine Gruppe repräsentiert, die nicht Wasserstoff, Alkyl oder Alkenyl ist, oder mindestens zwei der Reste R¹, R² und R³ eine andere Gruppe als Wasserstoff repräsentieren.

2. Fructanderivat nach Anspruch 1, **dadurch gekennzeichnet, daß** es pro Monosaccharid-Einheit im Durchschnitt 0,3 bis 2,0 kationische Gruppen enthält.

3. Fructanderivat nach Anspruch 1 oder 2, **dadurch gekennzeichnet, daß** A an ein Sauerstoffatom der Monosaccharid-Einheit gebunden ist.

4. Fructanderivat nach einem der Ansprüche 1 bis 3, wobei R¹ und R² jeweils Methyl oder Ethyl repräsentieren.

5. Fructanderivat nach einem der Ansprüche 1 bis 4, wobei A Ethylen oder 2-Hydroxypropylen repräsentiert.

6. Fructanderivat nach einem der Ansprüche 1 bis 5, wobei R¹, R² und R³ jeweils Methyl oder Ethyl repräsentieren und A eine 2-Hydroxy-1,3-propylen-Gruppe repräsentiert.

7. Fructanderivat nach einem der Ansprüche 1 bis 6, wobei das Fructan Inulin ist.

8. Verfahren zur Herstellung eines Fructanderivats, das pro Monosaccharid-Einheit im Durchschnitt mindestens 0,1 kationische Gruppen der folgenden Formel enthält:
-A-N⁺R¹R²R³ oder -C(=NR⁴)-NR¹R²
wobei:
A eine geradkettige oder verzweigte C₂-C₆-Alkylengruppe repräsentiert, der wahlweise eine Carbonylgruppe vorangestellt ist oder die wahlweise durch ein oder zwei Sauerstoffatome oder Imino- oder Alkyliminogruppen unterbrochen und wahlweise durch eine oder zwei Hydroxylgruppen oder Amingruppen oder eine Carboxyl- oder Carbamoyl-Gruppe substituiert ist;
oder A den Rest einer Monosaccharid-Einheit repräsentiert;
R¹ und R² jeweils Wasserstoff, Methyl, Carboxymethyl, Phosphonomethyl, Ethyl, Hydroxyethyl, Propyl, Isopropyl, Allyl, Hydroxypropyl oder Dihydroxylpropyl repräsentiert oder gemeinsam mit dem Stickstoffatom eine Pyrrolidino-, Piperidino-, Piperazino-, N'-Alkylpiperazino-, N'-(Hydroxyalkyl)piperazino-, N'-(Aminoalkyl)piperazino-, Morpholino- oder Hexamethylenaminogruppe bildet;
R³ Wasserstoff, C₁-C₁₈-Alkyl, C₃-C₁₈-Alkenyl, Alkinyl oder Cycloalkyl, C₄-C₁₈-Cycloalkyl-Alkyl oder C₇-C₁₈-Aralkyl repräsentiert oder eine Gruppe der Formel -A-Fruc, wobei A die oben bezeichnete Bedeutung hat und Fruc einen über Sauerstoff gebundenen Fructanrest repräsentiert; und
R⁴ Wasserstoff, Methyl, Ethyl, Hydroxyethyl, Hydroxypropyl oder Dihydroxypropyl repräsentiert;
wobei die Aminstickstoffatome ungeladen oder protoniert oder durch Methyl, Ethyl, Hydroxyethyl, Hydroxypropyl oder Dihydroxypropyl quaternisiert sein können;
indem das Fructan oder ein Derivat davon mit einer Verbindung der Formel -X-A-N⁺R¹R²R³ (X = Chlor oder Brom) oder X-A-NR²R³ oder einem Epoxid, das dieser nach Entfernung von HX entspricht, oder mit NC-NR¹R²R³ zur Reaktion gebracht wird.

9. Verfahren nach Anspruch 8, wobei die Reaktion bei einer Temperatur von 30 bis 150°C in einer wäßrigen, alkalischen Lösung durchgeführt wird.

10. Verfahren nach Anspruch 9, wobei die Reaktion in einer Extruder-Apparatur durchgeführt wird.

11. Verfahren nach einem der Ansprüche 8 bis 10, wobei das Fructan mit 3-Chlor-2-hydroxypropyltrimethylammoniumchlorid oder dem diesem entsprechenden Epoxid zur Reaktion gebracht wird.

12. Verfahren zur Herstellung eines kationischen Fructanderivats nach Anspruch 1 oder 2,
wobei ein Dialdehyd-Fructan reduktiv aminiert wird und das Aminierungsprodukt wahlweise quaternisiert wird.

13. Verwendung eines kationischen Fructanderivats nach einem der Ansprüche 1 bis 7 oder hergestellt durch das Verfahren nach einem der Ansprüche 8 bis 12 als ein Hilfsstoff bei der Papierherstellung, Wasseraufbereitung, Schlammaufbereitung oder in Kosmetika oder als ein Desinfektionsmittel, Haarfestiger, Flockungsmittel, Schieferhemmstoff, Korrosionshemmstoff, Demulgator, Klebstoff- oder Textilhilfsstoff oder als ein Additiv beim Bauen, in Keramik oder Kunststoff.

## Revendications

1. Dérivé de fructosane, **caractérisé en ce qu'**il contient, par unité de monosaccharide, en moyenne au moins 0,1 groupe cationique de la formule:
- A-N⁺R¹R²R³ ou-C(=NR⁴)-NR¹R²
formule dans laquelle :
A représente un groupe alkylène en C₂ - C₆ en chaîne droite ou ramifiée qui est optionnellement précédé d'un groupe carbonyle ou optionnellement interrompu par un ou deux atomes d'oxygène ou groupes imino ou alkylimino, et optionnellement substitué par un ou deux groupes hydroxyles ou amines ou par un groupe carboxyle ou carbamyle ;
ou A représente le résidu d'une unité monosaccharide ;
R¹ et R² représentent chacun hydrogène, méthyle, carboxyméthyle, phosphonométhyle, éthyle, hydroxyéthyle, propyle, isopropyle, allyle, hydroxypropyle ou dihydroxylpropyle ou, en même temps que l'atome d'hydrogène, forment un groupe pyrrolidino, pipéridino, pipérazino, N'-alkylpiperazino, N'-(hydroxyalkyl) pipérazino, N'-(aminoalkyl) pipérazino, morpholino ou hexaméthylèneamino ;
R³ représente hydrogène, C₁ - C₁₈ alkyle, C₃ - C₁₈ alkényle, alkynyle ou cycloalkyle, C₄ - C₁₈ cycloalkyle-alkyle ou C₇ - C₁₈ aralkyle ou un groupe de formule -A-Fruc, dans laquelle A a la signification mentionnée ci-dessus et Fruc représente un résidu de fructosane lié via un oxygène ; et
R⁴ représente hydrogène, méthyle, éthyle, hydroxyéthyle, hydroxypropyle ou dihydroxypropyle dans lesquels les atomes d'azote amine peuvent être non chargés ou protonés ou quaternisés avec méthyle, éthyle, hydroxyéthyle, hydroxypropyle ou dihydroxypropyle ;
à la condition que si A représente un groupe 1,3-propylène lié à un atome d'oxygène d'une unité monosaccharide non désordonnée du fructosane, alors R³ représente un groupe autre qu'hydrogène, alkyle ou alkényle, ou au moins deux des groupes R¹, R² et R³ représentent un groupe autre qu'hydrogène.

2. Dérivé de fructosane selon la revendication 1, **caractérisé en ce qu'**il contient, par unité de monosaccharide, en moyenne de 0,3 à 2,0 groupe cationique.

3. Dérivé de fructosane selon la revendication 1 ou 2, **caractérisé en ce que** A est lié à un atome d'oxygène de l'unité de monosaccharide.

4. Dérivé de fructosane selon l'une quelconque des revendications 1 à 3, dans lequel R¹ et R² représentent chacun méthyle ou éthyle.

5. Dérivé de fructosane selon l'une quelconque des revendications 1 à 4, dans lequel A représente éthylène ou 2-hydroxypropylène.

6. Dérivé de fructosane selon l'une quelconque des revendications 1 à 5, dans lequel R¹, R² et R³ représentent chacun méthyle ou éthyle et A représente un groupe 2-hydroxy-1,3-propylène.

7. Dérivé de fructosane selon l'une quelconque des revendications 1 à 6, dans lequel le fructosane est de l'inuline.

8. Procédé de préparation d'un dérivé de fructosane contenant, par unité de monossacharide, en moyenne au moins 0,1 groupe cationique de la formule :
-A-N⁺R¹R²R³ ou -C(=NR⁴) - NR¹R²
formule dans laquelle :
A représente un groupe alkylène en C₂ - C₆ en chaîne droite ou ramifiée qui est optionnellement précédé d'un groupe carbonyle ou optionnellement interrompu par un ou deux atomes d'oxygène ou groupes imino ou alkylimino, et optionnellement substitué par un ou deux groupes hydroxyles ou amines ou par un groupe carboxyle ou carbamyle ;
ou A représente le résidu d'une unité monosaccharide ;
R¹ et R² représentent chacun hydrogène, méthyle, carboxyméthyle, phosphonométhyle, éthyle, hydroxyéthyle, propyle, isopropyle, allyle, hydroxypropyle ou dihydroxylpropyle ou, en même temps que l'atome d'hydrogène, forment un groupe pyrrolidino, pipéridino, pipérazino, N'-alkylpiperazino, N'-(hydroxyalkyl) pipérazino, N'-(aminoalkyl) pipérazino, morpholino ou hexaméthylèneamino ;
R³ représente hydrogène, C₁ - C₁₈ alkyle, C₃ - C₁₈ alkényle, alkynyle ou cycloalkyle, C₄ - C₁₈ cycloalkyle-alkyle ou C₇ - C₁₈ aralkyle ou un groupe de formule -A-Fruc, dans laquelle A a la signification mentionnée ci-dessus et Fruc représente un résidu de fructosane lié via un oxygène ; et
R⁴ représente hydrogène, méthyle, éthyle, hydroxyéthyle, hydroxypropyle ou dihydroxypropyle dans lesquels les atomes d'azote amine peuvent être non chargés ou protonés ou quaternisés avec méthyle, éthyle, hydroxyéthyle, hydroxypropyle ou dihydroxypropyle ;
en faisant réagir le fructosane ou un dérivé de celui-ci avec un composant de formule -X-A-N⁺ R¹R²R³ (X = chlore ou brome) ou X-A-NR²R³ ou correspondant à celui-ci après retrait de HX, ou avec NC-NR¹R²R³.

9. Procédé selon la revendication 8, dans lequel la réaction est menée à bien à une température de 30 - 150°C dans une solution alcaline aqueuse.

10. Procédé selon la revendication 9, dans lequel la réaction est menée à bien dans un appareil d'extrusion.

11. Procédé selon l'une des revendications 8 à 10, dans lequel on fait réagir le fructosane avec du chlorure de 3 -chloro-2-hydroxypropyltriméthylammonium ou de l'époxyde correspondant à celui-ci.

12. Procédé de préparation d'un dérivé cationique de fructosane selon la revendication 1 ou 2, dans lequel un dialdéhyde-fructosane est aminé de façon réductive et le produit d'amination est optionnellement quaternisé.

13. Utilisation d'un dérivé cationique de fructosane selon l'une quelconque des revendications 1 à 7 ou préparé selon l'une quelconque des revendications 8 - 12, en tant qu'un auxiliaire dans la fabrication du papier, le traitement des eaux, le traitement des boues ou dans les produits cosmétiques, ou en tant qu'un désinfectant, qu'un revitalisant pour les cheveux, qu'un floculant, d'un produit d'inhibition de la formation de calcaire, un produit inhibant la corrosion, qu'un désémulsifiant, qu'un adhésif ou qu'un auxiliaire du textile, ou en tant qu'un additif dans la construction, les céramiques ou les plastiques.
